(19) Europäisches Patentamt
European Patent Office
Office européen des brevets

(11) Publication number: **0 489 437 A2**

(12) **EUROPEAN PATENT APPLICATION**

(21) Application number: **91120899.9**

(22) Date of filing: **05.12.91**

(51) Int. Cl.5: **C08L 77/10**, C08L 77/06, C08L 81/02, //(C08L77/10, 81:02),(C08L77/06,81:02), (C08L81/02,77:10),(C08L81/02, 77:06)

(30) Priority: **05.12.90 JP 400461/90**

(43) Date of publication of application: **10.06.92 Bulletin 92/24**

(84) Designated Contracting States: **DE FR GB IT NL**

(71) Applicant: **MITSUI PETROCHEMICAL INDUSTRIES, LTD.**
**2-5, Kasumigaseki 3-chome Chiyoda-ku**
**Tokyo 100(JP)**

(72) Inventor: **Yamamoto, Sanehiro**
**c/o Mitsui Petrochem. Ind., Ltd., 1-2 Waki 6-chome**
**Waki-cho, Kuga-gun, Yamaguchi 740(JP)**
Inventor: **Toyota, Akinori**
**c/o Mitsui Petrochem. Ind., Ltd., 1-2 Waki 6-chome**
**Waki-cho, Kuga-gun, Yamaguchi 740(JP)**

(74) Representative: **Hansen, Bernd, Dr.rer.nat. et al**
**Hoffmann, Eitle & Partner Patentanwälte**
**Arabellastrasse 4 Postfach 81 04 20**
**W-8000 München 81(DE)**

(54) **Aromatic polyamide resin composition.**

(57) Aromatic polyamide compositions of the present invention comprise
(I) an aromatic polyamide comprising
dicarboxylic acid units comprising 30-100 mol% of units derived from terephthalic acid, and 0-70 mol% of units derived from an aromatic dicarboxylic acid other than terephthalic acid and/or 0-70 mol% of an aliphatic dicarboxylic acid having 4-20 carbon atoms, and
diamine units derived from an aliphatic diamine and/or an alicyclic diamine, and
(II) a polyphenylene sulfide
wherein a weight ratio of (I) to (II) is 5:95~95:5.

EP 0 489 437 A2

## FIELD OF THE INVENTION

This invention relates to aromatic polyamide resin compositions particularly having improved thermal aging resistance. More particularly, the invention relates to aromatic polyamide resin compositions having improved thermal aging resistance as well as suppressed hygroscopicity and hygroscopic dimensional change.

## BACKGROUND OF THE INVENTION

Aliphatic polyamide (nylon) such as nylon 6, nylon 66 or nylon 610 has heretofore been used as an engineering plastic.

Such aliphatic polyamides as referred to above are low in glass transition temperature (e.g. a glass transition temperature of usually 60 ° C or thereabouts), though they are excellent in moldability. Accordingly, the aliphatic polyamides are not always suitable for use in engineering plastics for high-temperature application.

An attempt has been made to provide engineering plastics usable even under the circumstances of high temperature by improving in heat resistance inherent in the aliphatic polyamides. It is known that the aliphatic polyamides are improved in heat resistance by incorporation with phenylene sulfide. For example, Japanese Patent L-O-P Publn. No. 126172/1986 discloses injection-molded articles obtained from compositions containing nylon 66, polyphenylene sulfide and reinforcing fibers. However, the molded articles containing such aliphatic polyamide as nylon 66 markedly decrease in bending strength and flexural modulus when they are used at a temperature higher than about 60-80 ° C. Accordingly, as far as the aliphatic polyamide is used in a resin composition, a working temperature at which the resin composition containing said aliphatic polyamide can be used is about 60-80 ° C, thus such resin compositions containing aliphatic polyamides are not suitable for use at a temperature higher than about 60-80 ° C (for example 100 ° C or higher) for an extended period of time.

Further, Japanese Patent L-O-P Publn. No. 155462/1984 discloses resin compositions containing polyphenylene sulfide, polyamide and epoxy resin. The polyamide that can be used in the resin compositions cited above includes those having dicarboxylic acid units derived from oxalic acid, adipic acid, sebasic acid, terephthalic acid, isophthalic acid or 1,4-cyclohexanedicarboxylic acid. The purport of the above-cited publications considered to reside in improvement of various characteristics of the resin compositions by an improvement in compatibility of the polyamide with polyphenylene sulfide. Therefore, the polyamide disclosed concretely in this publication is nylon 66 (aliphatic polyamide) that is poor in compatibility with polyphenylene sulfide.

Generally, aromatic polyamides having the dicarboxylic acid units consisting essentially of aromatic dicarboxylic acid have been known in addition to aliphatic polyamides disclosed concretely in the above-cited publications.

The aliphatic polyamides are markedly different from the aromatic polyamides in characteristics and properties including heat resistance, water resistance, solubility, moldability, etc., though these two kinds of polyamides have an amide bond in common to each other. That is, the aliphatic polyamides and the aromatic polyamides are resins that are different in kind from each other and also in characteristics and properties thereof, thus the technical field to which the aliphatic polyamides pertain is different substantially from that to which the aromatic polyamides pertain.

## OBJECT OF THE INVENTION

An object of the present invention is to embody a further improvement in heat resistance of the aromatic polyamides, said heat resistance being superior to that of the aliphatic polyamides. More particularly, the object of the invention is to provide aromatic polyamide resin compositions markedly improved in characteristics inherent in aromatic polyamides, particularly the property of inhibiting deterioration of said characteristics, that is, thermal aging resistance when said aromatic polyamides are exposed to high temperature for a long period of time.

## SUMMARY OF THE INVENTION

The aromatic polyamide resin compositions of the present invention are characterized in that said resin compositions comprise

(I) an aromatic polyamide comprising

dicarboxylic acid units comprising 30-100 mol% of units derived from terephthalic acid, and 0-70 mol% of units derived from an aromatic dicarboxylic acid other than terephthalic acid and/or 0-70 mol% of an aliphatic dicarboxylic acid having 4-20 carbon atoms, and

diamine units derived from an aliphatic diamine and/or an alicyclic diamine, and

(II) a polyphenylene sulfide

wherein a weight ratio of (I) to (II) is 5:95 - 95:5.

The above-mentioned aromatic polyamides used in the invention are preferably those having an intrinsic viscosity, as measured in concentrated sulfuric acid at 30 °C, of 0.50 to 3.00 dl/g and a melting point of at least 280 °C.

In the aromatic polyamide resin compositions of the invention comprising the specific aromatic polyamide as mentioned above and polyphenylene sulfide in the specific proportion as defined above, under a synergistic action of the aromatic polyamide and polyphenylene sulfide, the rigidity (e.g. flexural modulus) at high temperature (e.g. 120 °C) of the present resin composition is found to be markedly excellent in comparison with that of the resin composition comprising aliphatic polyamide and polyphenylene sulfide, and changes in characteristics of the present resin composition after exposure to high temperature (e.g. 200 °C) are found to be small. Further, the hygroscopicity of molded articles obtained from the present resin compositions is found to be lower than that of the resin compositions comprising the aliphatic polyamides.

Furthermore, the resin compositions of the invention are increased in heat resistance and mechanical characteristics by incorporation into said composition of fibrous fillers.

## DETAILED DESCRIPTION OF THE INVENTION

The aromatic polyamide resin compositions of the present invention are illustrated below in detail.

The aromatic polyamide resin compositions of the invention comprise specific aromatic polyamides as shown below and polyphenylene sulfide.

The aromatic polyamides are composed of specific dicarboxylic acid units [a] and specific diamine component units [b].

The specific dicarboxylic acid units [a] as mentioned above include terephthalic acid units derived from terephthalic acid as an essential unit. Such recurring units containing the terephthalic acid unit (a-1) may be represented by the following formula [I-a].

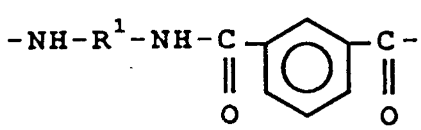

...[I-a]

wherein $R^1$ represents a divalent hydrocarbon group corresponding to a diamine component as will be mentioned later.

The carboxylic acid units [a] are not required to be entirely composed of the terephthalic acid units represented in the above-mentioned formula [I-a], but may contain other dicarboxylic acid units in place of part of the terephthalic acid units (a-I) as described above.

The dicarboxylic acid units other than terephthalic acid units include aromatic dicarboxylic acid units (a-2) other than terephthalic acid units and aliphatic dicarboxylic acid units (a-3).

Examples of the aromatic dicarboxylic acid units (a-2) other than terephthalic acid units include isophthalic acid units, 2-methylterephthalic acid units, naphthalenedicarboxylic acid units and biphenylenedicarboxylic acid units. When the polyamide used in the present invention contains acid units derived from an aromatic dicarboxylic acid other than terephthalic acid, isophthalic acid units are particularly preferable.

The recurring units comprising the isophthalic acid units in the invention can be represented by the formula

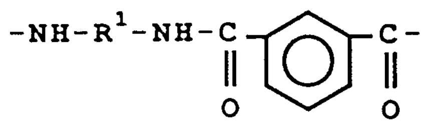 ...[I-b]

wherein $R^1$ represents a bivalent hydrocarbon group, preferably an alkylene group having 4 to 18 carbon atoms.

The alipghatic dicarboxylic acid units (a-3) are derived from an aliphatic dicarboxylic acid having an alkylene group of usually 4 to 20 carbon atoms, preferably 6 to 12 carbon atoms. Examples of the aliphatic dicarboxylic acid used for deriving the aliphatic dicarboxylic acid units (a-3) include succinic acid, adipic acid, azelaic acid and sebacic acid.

When the polyamide of the invention contains aliphatic dicarboxylic acid units, particularly preferable as the acid units are adipic acid units and sebacic acid units.

The recurring units containing the aliphatic dicarboxylic acid units (a-3) can be represented by the formula

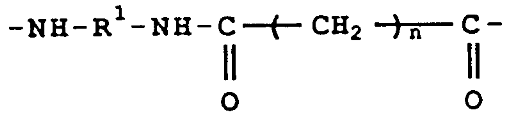 ... [II]

wherein $R^1$ is as defined above, n is an integer of usually 4 to 20, preferably 6 to 12.

As described above, the recurring units of the present polyamide comprises the dicarboxylic acid units [a] and diamine units [b].

The diamine units [b] can be derived from an aliphatic alkylenediamine having 4 to 18, preferably 6 to 18 carbon atoms.

Concrete examples of aliphatic alkylene diamine include
1,4-diaminobutane,
1,6-diaminohexane,
trimethyl-1,6-diaminohexane,
1,7-diaminoheptane,
1,8-diaminooctane,
1,9-diaminononane,
1,10-diaminodecane,
1,11-diaminoundecane, and
1,12-diaminodecane.

The diamine units [b] used in the invention are desirably derived particularly from straight chain alkylene diamines which include concretely
1,6-diaminohexane,
1,8-diaminooctane,
1,10-diaminodecane,
1,12-diaminododecane and mixtures thereof.

Of the compounds exemplified above, particularly preferred is 1,6-diaminohexane.

The alicyclic diamine units are derived from alicyclic diamines having usually 3 to 18 carbon atoms, preferably 6 to 18 carbon atoms.

Concrete examples of the alicyclic diamines mentioned above include
cyclohexylene diamine,
bis(aminomethyl)cyclohexane,
bis(4-aminocyclohexyl)methane,
4,4'-dimaino-3,3'-dimethyldicyclohexylmethane,
1,3-bis(aminocyclohexyl)methane and
1,3-bis(aminomethyl)cyclohexane.

The diamines exemplified above may be used either singly or in combination.

The carboxylic acid units (100 mol%) of the aromatic polyamide (A) comprise 30-100 mol%, preferably 50-100 mol% of the terephthalic acid units (a-1), 0-70 mol%, preferably 0-50 mol% of the aromatic dicarboxylic acid units (a-2) other than terephthalic acid units and/or 0-70 mol%, preferably 0-50 mol% of

the aliphatic dicarboxylic acid units (a-3).

Furthermore, the dicarboxylic acid units may also comprise units derived from a polybasic carboxylic acid having a basicity of at least three, such as trimellitic acid or pyromellitic acid in a small amount in addition to the above-mentioned recurring units. The amount of such a polybasic carboxylic acid units is usually 0-5 mol%.

The aromatic polyamide used in the invention has an intrinsic viscosity [$\eta$], as measured in conc. sulfuric acid at 30° C, of usually 0.5 to 3.0 dl/g, preferably 0.5 to 2.8 dl/g and especially 0.6 to 2.5dl/g. The content of an amino group in the aromatic polyamide of the invention is usually 0.04 to 0.2 mill equivalent/g, preferably 0.045 to 0.15 mill equivalent/g and especially 0.05 to 0.1 mill equivalent/g as quantitatively determined by neutralizing titration with p-toluenesulfonic acid in a m-cresol solution.

Still furthermore, the aromatic polyamide (A) used in the present invention may be a mixture of an aromatic polyamide comprising recurring units represented by the above formula [I-a] as main recurring units, and an aromatic polyamide comprising recurring units represented by the above formula [I-b] as main recurring units. In this case, the amount in the mixture of the aromatic polyuamide comprising recurring units represented by the formula [I-a] as main recurring units is usually at least 50% by weight, preferably at least 60% by weight.

The aromatic polyamide used in the invention has a melting point higher than that of conventionally used aliphatic polyamides. That is to say, the aromatic polyamide used in the invention has a melting point exceeding 280° C, preferably 290 to 340° C, more preferably 305 to 340° C, especially 310 to 340° C. Those aromatic polyamides having a melting point of preferably 305 to 340° C, more preferably 310 to 340° C are significantly excellent in heat resistance. Moreover, the amorphous part of the aromatic polyamide used in the invention has a glass transition temperature of usually 110° C or more.

By using the aromatic polyamides having the melting point and the glass transition temperature of the amorphous portion thereof as defined above in the resin compositions, the molded articles obtained therefrom are less in change of their characteristics even when used in a considerably severe temperature conditions (e.g. a temperature of 200° C or thereabouts), and thus such molded articles can be used over a long period of time. Further, the resin compositions of the invention comprising such aromatic polyamides as mentioned above are excellent in moldability, hence the use of said resin compositions facilitates the process for the preparation of molded articles therefrom. Furthermore, the aromatic polyamides used in the resin compositions of the invention have a glass transition temperature of at least 110° C in the amorphous portion thereof, hence cracks or the like defects are difficult to occur in the molded articles formed from the resin compositions of the invention even when said molded articles are exposed to high temperature.

When compared with the conventional aliphatic polyamides, the aromatic polyamides used in the invention are low in water absorption properties, hence the resin compositions of the invention containing such aromatic polyamides and polyphenylene sulfide exhibit a very low water absorption.

The polyphenylene sulfide used in the resin compositions of the invention along with the aromatic polyamides mentioned above is a polymer having recurring units represented by the following formula [3] in an amount of usually at least 70 mol%, preferably at least 90 mol%.

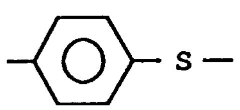

... [3]

The polyphenylene sulfide used in the invention, besides the polymer having solely the recurring units represented by the above-mentioned formula [3], may also be a copolymer having the above-mentioned recurring units of the formula [3] and recurring units represented respectively by the formulas [4] to [9] as shown below.

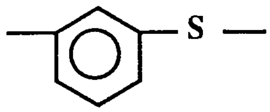

... [4]

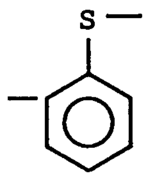

... [5]

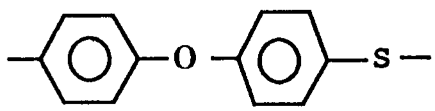

... [6]

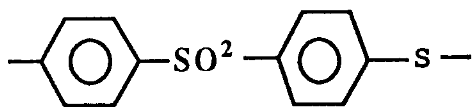

... [7]

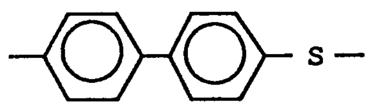

... [8]

The recurring units represented respectively by the above-mentioned formulas [3] to [8] may have in the aromatic ring thereof a substituent such as alkyl, nitro, phenyl or alkoxyl.

Further, the above-mentioned copolymer usable as the aromatic polyamide in the invention may also comprise such trifunctional phenylsulfide recurring units as represented by the following formula [9] in an amount of not more than 10 mol%.

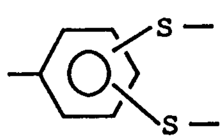

... [ 9 ]

The polyphenylene sulfide used in the present invention includes preferably those having a viscosity, as measured by a flow tester under a load of 20 kg and at a temperature of 300 ° C, of 100 to 10000 poise, preferably 200 to 5000 poise, more preferably 300 to 3000 poise.

Such polyphenylene sulfides as mentioned above may be prepared by various known polymerization techniques, for example, polymerization of p-chlorobenzene in the presence of sulfur and sodium carbonate, polymerization of p-chlorobenzene in a polar solvent in the presence of sodium sulfide or sodium hydrosulfide and sodium hydroxide, or in the presence of hydrogen sulfide and sodium hydroxide, self-polymerization of p-chlorothiophenol. Of the known polymerization techniques mentioned above, preferred is polymerization of p-dichlorobenzene and sodium sulfide in an amide type solvent such as N-methylpyrrolidone or dimethylacetamide or a sulfone type solvent such as sulfofuran. In carrying out the polymerization reaction of the reactants as mentioned above, a metallic salt of system in order to control polymerization degree of the resulting polyphenylene sulfide.

With respect to the method for the preparation of polyphenylene sulfides used in the invention, reference may be made to U.S. Patents 2,513,188, 3,274,165, British Patent 1,160,660, Belgium Patent 29,437, Japanese Patent Publns. Nos. 27671/1969, 3368/1970, 27255/1971, Japanese Patent L-O-P Publns. Nos. 84698/1985 and 144495/1986.

The aromatic polyamide resin compositions of the invention comprise the specific aromatic polyamide and polyphenylene sulfide as mentioned above in the weight ratio of 5:95 to 95:5. Particularly, from the

resin compositions of the invention comprising the aromatic polyamide and polyphenylene sulfide in the weight proportion of 20:80 to 80:20, preferably 30:70 to 70:30, there can be formed molded articles (containing a fibrous filler) which are less in decrease of bending strength and bending modulus after heating for 10 days at a temperature of 220 ° C, and which have a water absorption, as measured by immersion in hot water at 100 ° C for 24 hours, of usually not more than 3%, preferably not more than 2.5%. In this case, the molded articles obtained are found to be particularly preferable with respect to change in dimension as evidence by the fact that the degree of change in dimension of said molded articles is found to be 1/5 to 4/5 of that of the molded articles obtained from the corresponding aromatic polyamide. Further, molded articles having very high heat resistance can be formed from the resin compositions of the invention as mentioned above. For example, from the resin composition containing a fibrous filler as mentioned above, there can be prepared molded articles having a heat distortion temperature (HDT) of usually at least 270 ° C, preferably 280 ° C.

The aromatic polyamide resin compositions of the present invention as illustrated above may contain such additives as inorganic fillers, organic fillers, heat stabilizers, weathering stabilizers, antistatic agents, anti-slip agents, anti-block agents, antifogging agents, lubricants, pigments, dyes, natural oils, synthetic oils and waxes, so long as they do not mar characteristics of said resin compositions.

Particularly, the aromatic polyamide resin compositions of the invention are preferably incorporated with fibrous fillers.

The fibrous fillers used herein include organic fibers and inorganic fibers, and both fibers may be used in the invention. It is however preferable to use the fibrous fillers comprising inorganic fibers. Preferred inorganic fibers used herein include glass fiber and boron fiber. The fibrous fillers comprising glass fiber is particularly preferred. Molded articles formed from the aromatic polyamide resin compositions containing glass fiber as the fibrous filler are improved in mechanical characteristics such as tensile strength, bending strength and bending modulus, and in heat-resisting properties such as heat distortion temperature. The glass fiber suitably used as the fibrous filler in the resin compositions of the invention includes those having an average fiber length of usually 0.1 to 20 mm, preferably 0.3 to 6 mm, and an aspect ratio of usually 10 to 2000, preferably 30 to 600. The resin compositions of the invention containing such glass fiber as mentioned above are improved in moldability and, at the same time, molded articles formed therefrom are particularly excellent in heat-resisting properties such as heat distortion temperature and in mechanical characteristics such as tensile strength and bending strength.

The amount of the fibrous filler to be contained in the resin compositions of the invention is usually 0.5 to 200 parts by weight, preferably 5 to 180 parts by weight and especially 5 to 150 parts by weight based on 100 parts by weight of the sum total of the aromatic polyamide and polyphenylene sulfide present in the resin composition.

In addition to the inorganic fibrous fillers mentioned above, the aromatic polyamide resin compositions of the invention may contain various fillers having the form of powder, granule, plate, needle, cloth or mat. Examples of such fillers varying in form as mentioned above include inorganic compounds in the form of powder or plate such as silica, silica alumina, alumina, titanium dioxide, talc, diatomaceous earth, clay, kaolin, glass, mica, gypsum, iron oxide red and zinc oxide, and fabricated articles in the form of powder, plate, fiber or cloth formed from heterocyclic compounds such as polyparaphenylene terephthalamide, polymetaphenylene terephthalamide, polyparaphenylene isophthalamide, polymetaphenylene, condensates of isophthalamide or diaminodiphenyl ether with terephthalic acid (isophthalic acid), condensates of whole aromatic polyamides such as para(meta)aminobenzoic acid, condensates of whole aromatic polyamide-imides such as condensates of diaminodiphenyl ether with trimellitic anhydride or pyromellitic anhydride, whole aromatic polyesters, whole aromatic polyamides polybenzimidazole and polyimidazophenanthroline, or polytetrafluoroethylene.

The fillers exemplified above may also be used in admixtures of two or more, and they may also be used after treatment with a silane coupling agent or titanium coupling agent. The fillers in the powder form have an average particle diameter of usually 0.1 to 200 $\mu$m, preferably 1 to 100 $\mu$m.

The fillers in the powder form are used in an amount, based on 100 parts by weight of the sum total of the aromatic polyamide and polyphenylene sulfide, i.e. the resin component polyamide and polyphenylene sulfide, i.e. the resin component in the resin composition, of usually not more than 200 parts by weight, preferably not more than 100 parts by weight and especially 0.5 to 50 parts by weight.

The resin compositions of the present invention may be mixed with heat resistant resins so long as said resins do not mar characteristics of said resin compositions. Examples of such heat resistant thermoplastic resins as may be used herein include polyphenyl ether (PPE), polyether sulfone (PES), polyether imide (PEI) and liquid crystal polymer (LCP), including further modified products of these resins. The content in the resin compositions of the invention of such heat resistant thermoplastic resins is usually less than 50%

by weight, preferably 0 to 40% by weight.

The aromatic polyamide resin composition of the invention may contain a phosphorus stabilizer in addition to the aromatic polyamide and the polyphenylene sulfide.

Examples of the phosphorus stabilizer contained in the aromatic polyamide resin composition of the invention include 9,10-dihydro-9-oxa-10-phosphophenanthrene-10-oxide, triphenyl phosphite, 2-ethylhexyl phosphate, dilauryl phosphite, triisooctyl phosphite, tris(2,4-di-tert-butylphenyl) phosphite, trilauryl phosphite, trilauryl dithiophosphite, trilauryl trithiophosphite, trisnonylphenyl phosphite, distearylpentaerythritol diphosphite, tris(monononylphenyl) phosphite, tris(dinonylphenyl) phosphite, trioctadecyl phosphite, 1,1,3-tris(2-methyl-di-tridecyl phosphite-5-tert-butylphenyl)butane, 4,4'-butylidenebis(3-methyl-6-tert-butyl)tridecyl phosphite, 4,4'-butylidenebis(3-methyl-6-tert-butyl-ditridecyl) phosphite, bis(2,4-di-tert-butylphenyl)-pentaerythritol diphosphite, bis(2,6-di-tert-butyl-4-methylphenyl)pentaerythritol diphosphite, tetrakis(2,4-di-tert-butylphenyl)4,4'-bisphenylene diphosphonite, distearylpentaerythritol diphosphite, tridecyl phosphite, tristearyl phosphite, 2,2'-methylenebis(4,6-di-tert-butylphenyl)octyl phosphite, sorbitol trisphosphite-distearyl-mono-$C_{30}$-diol ester and bis(2,4,6-tri-tert-butylphenyl)pentaerythritol diphosphite.

These phosphorus stabilizer can be used singly or in combination.

The phosphorus stabilizer is used in an amount of 0.05 to 2 parts by weight based on 100 parts by weight of the total amount of the aromatic polyamide and the polyphenylene sulfide. Moreover, the phosphorus stabilizer is used in an amount of preferably 0.1 to 1.5 parts by weight and particularly preferably 0.2 to 1.0 part by weight.

Other stabilizers in addition to the phosphorus stabilizer mentioned above can be used for the aromatic polyamide resin composition of the invention. The other stabilizer usable with the phosphorus stabilizer include a phenolic stabilizer and an amine stabilizer.

Examples of the phenolic stabilizer used in the invention include 3,9-bis(2-[3-(3-tert-butyl-4-hydroxy-5-methylphenyl)propionyl]-1,1-dimethylethyl)-2,4,8,10-tetraoxaspiro[5.5]undecane, 2,6-di-tert-butyl-p-cresol, 2,4,6-tri-tert-butylphenol, n-octadecyl-3-(4'-hydroxy-3',5'-di-tert-butylphenyl)propionate, styrenized phenol, 4-hydroxymethyl-2,6-di-tert-butylphenol, 2,5-di-tert-butylhydroquinone, cyclohexylphenol, butylhydroxyanisole, 2,2'-methylenebis(4-methyl-6-tert-butylphenol, 2,2'-methylenebis(4-ethyl-6-tert-butylphenol), 4,4'-isopropylidenebisphenol, 4,4'-butylidenebis(3-methyl-6-tert-butylphenol), 1,1-bis(4-hydroxyphenyl)-cyclohexane, 4,4'-methylenebis(2,6-di-tert-butylphenol), 2,6-bis(2'-hydroxy-3'-tert-butyl-5'-methylbenzyl)-4-methylphenol,1,1,3-tris(2-methyl-4-hydroxy-5-tert-butylphenyl)butane, 1,3,5-trismethyl-2,4,6-tris(3,5-di-tert-butyl-4-hydroxybenzyl)benzene, tetrakis[methylene 3-(3,5-di-tert-butyl-4-hydroxyphenyl-propionate]methane, tris(3,5-di-tert-butyl-4-hydroxyphenyl)isocyanurate, tris[β-(3,5-di-tert-butyl-4-hydroxyphenyl)-propionyloxyethyl]isocyanurate, 4,4'-thiobis(3-methyl-6-tert-butylphenol), 2,2'-thiobis(4-methyl-6-tert-butylphenol), 4,4'-thiobis(2-methyl-6-tert-butylphenol) and N,N'-hexamethylenebis(3,5-di-tert-butylphenol-4-hydroxy-cinnamide.

Examples of the amine stabilizer include 4,4'-bis(α,α-dimethylbenzyl)diphenylamine, phenyl-α-naphthylamine, phenyl-β-naphthylamine, N,N'-diphenyl-p-phenylenediamine, N,N'-di-β-naphthyl-p-phenylenediamine, N-cyclohexyl-N'-phenyl-p-phenylenediamine, N-phenyl-N'-isopropyl-p-phenylenediamine, aldol-α-naphthylamine, polymer of 2,2,4-trimethyl-1,2-dihydroquinone and 6-ethoxy-2,2,4-trimethyl-1,2-dihydroquinoline.

These other stabilizers (antioxidants) can be used singly or in combination. These other stabilizers are used in an amount of usually 0.05~2.0 parts by weight, preferably 0.1 to 1.0 part by weight based on 100 parts by weight of the total amount of the aromatic polyamide and the polyphenylene sulfide.

The resin compositions of the invention may be prepared by mixing together the aforementioned aromatic polyamide, polyphenylene sulfide and, if necessary, the above-mentioned additives and other resins, followed by melting. For example, the aforementioned aromatic polyamide and polyphenylene sulfide are melted together, and the resulting molten mixture is kneaded, if necessary, along with the above-mentioned fillers or other resins, whereby the thermoplastic resin composition of the invention is prepared. In this case, there can be used an ordinary kneading device such as an extruder, kneader or the like.

The aromatic polyamide resin compositions prepared may be molded into molded articles having a desired shape by means of an ordinary melt molding method, for example, compression molding, injection molding or extrusion molding.

The molded article may be produced, for example, by feeding the resin composition of the invention to an injection molding machine at a cylinder temperature of about 300-350 °C, and introducing the resulting melt into a mold having a predetermined shape.

No particular limit is placed on the shape of molded articles formed from the aromatic polyamide resin compositions of the invention. For example, machine parts such as gear, cam, etc. and electronic parts such as printed circuit board, housing for electronic part, etc. can be formed from the resin compositions of

the invention.

The aromatic polyamide resin compositions of the invention are suitable for the preparation of molded articles which are exposed to high temperature (e.g. 200°C or higher) for a long period of time. That is, the resin compositions of the invention are suitable for the preparation of molded articles which are used under the circumstance of high temperature, such molded articles could not be formed from the resin compositions consisting essentially of aliphatic polyamides. Examples of the molded articles used under the circumstances of high temperature as mentioned above include, for example, housings for electronic parts to be welded by the infrared reflow system, automotive parts used at high temperatures, for example, cylinder block, cylinder head cover, oil pan, carburetor, air intake pipe and bearing retainer. The resin compositions of the invention are suitable for use in automotive parts used under an aquatic environment, water pump impeller, hot connector, radiator tank, etc.

EFFECT OF THE INVENTION

The aromatic polyamide resin compositions of the present invention comprise such specific aromatic polyamides as mentioned above and polyphenylene sulfide, as illustrated above. That is, from the resin compositions of the invention comprising the specific aromatic polyamides there can be prepared molded articles exhibiting excellent heat resistance, said molded articles could not be obtained from conventional resin compositions comprising aliphatic polyamides. In particular, the molded articles formed from the resin compositions of the invention are less in decrease of characteristics such as bending strength and bending modulus even when exposed to very high temperatures such as 200°C or higher, thus exhibit excellent thermal aging resistance.

Further, the above-mentioned resin compositions of the invention have HDT markedly higher than that of the resin compositions consisting essentially of aliphatic polyamides. Utilizing their excellent characteristics as mentioned hereinabove, the aromatic polyamide resin compositions of the invention can be used effectively for the preparation of molded articles used at very high temperatures, whereas the conventional resin compositions consisting essentially of aliphatic polyamides could not be used for the same purposes as mentioned above.

Furthermore, with all their excellent characteristics, of the aromatic polyamide resin compositions of the invention, they are still comparable in moldability to the conventional aliphatic polyamide resin compositions, thus the resin compositions of the invention can be formed into desired molded articles in accordance with the molding techniques employed in the case of the aliphatic polyamide resin compositions.

The present invention is illustrated below in detail, but it should be construed that the invention is in no way limited to those examples.

Example 1

Terephthalic acid, adipic acid and hexamethylenediamine were used to prepare an aromatic polyamide (A-1). The molar ratio in this aromatic polyamide (A-1) of the component units derived from terephthalic acid to the recurring units derived from adipic acid was 55:45. The aromatic polyamide thus prepared had a melting point of 312°C, and an intrinsic viscosity [$\eta$], as measured in concentrated sulfuric acid at 30°C, of 1.02 dl/g.

A mixture comprising 75 parts by weight of the aromatic polyamide (A-1), 25 parts by weight of polyphenylene sulfide (T-4) having a viscosity of 2390 poise (a product of Toprene K.K.) and 67 parts by weight of glass fiber (glass fiber chopped store laid 03MA486A, a product of Asahi Fiber Glass K.K.) was kneaded by means of a twin-screw extruder at a cylinder temperature of 320°C, followed by pelletization.

The viscosity of the polyphenylene sulfide used herein was measured by means of a flow tester using a load of 20 kg, preheating for 6 minutes, die L/D = 10/1 and a temperature of 300°C.

Using a test specimen (63.5 mm x 12.7 mm x 3.2 mm) prepared from the pellets obtained above, there were measured an initial bending strength, an initial bending modulus, a bending strength and a bending modulus after allowing the specimen to stand for 10 days at 220°C.

HDT (heat distortion temperature) of the test specimen was measured in accordance with ASTM D 648.

Furthermore, using a test specimen (130 mm x 120 mm x 2.0 mm) prepared from the above-mentioned pellets, there were measured a hygroscopicity and a change in dimensions (length and width) after allowing the specimen to stand in hot water of 100°C for 24 hours.

Results obtained are shown in Table 1.

Example 2

Test specimens were prepared in the same manner as in Example 1 except that the amounts of the aromatic polyamide (A-1) and polyphenylene sulfide (T-4) used were changed to 50% by weight and 50% by weight, respectively.

The test specimens thus prepared were put to the same tests as in Example 1.

Results obtained are shown in Table 1.

Example 3

Test specimens were prepared in the same manner as in Example 1 except that in place of the polyphenylene sulfide (T-4), there was used a polyphenylene sulfide (T-1) having a viscosity of 350 poise (a product of Toprene K.K.).

The test specimens thus prepared were put to the same tests as in Example 1.

Results obtained are shown in Table 1.

Comparative Example 1

Test specimens were prepared in the same manner as in Example 1 except that the polyphenylene sulfide (T-1) was not used and the amount of the aromatic polyamide (A-1) used was changed to 100 parts by weight.

The test specimens thus prepared were put to the same tests as in Example 1.

Results obtained are shown in Table 1.

Table 1

| | Example 1 | Example 2 | Example 3 | Compar. Example. 1 |
|---|---|---|---|---|
| Initial characteristics | | | | |
| Bending strength ($Kg/cm^2$) | 2840 | 2410 | 2880 | 2890 |
| Bending modulus ($Kg/cm^2$) | 124000 | 135000 | 125000 | 122000 |
| HDT (264psi) (°C) | 294 | 282 | 295 | 300 |
| Hygroscopicity (%) | 2.7 | 1.7 | 2.8 | 3.6 |
| Change in dimensions at the time of water absorption | | | | |
| Length | 0.19 | 0.11 | 0.18 | 0.25 |
| Width | 0.50 | 0.33 | 0.48 | 0.67 |
| Thermal aging resistance | | | | |
| Bending strength ($Kg/cm^2$) | 2000 | 1950 | 1770 | 1590 |
| Bending modulus ($Kg/cm^2$) | 127000 | 142000 | 138000 | 120000 |

Example 4

Terephthalic acid, isophthalic acid and hexamethylenediamine were used to prepare an aromatic polyamide (A-2). The molar ratio in this aromatic polyamide (A-2) of the recurring units derived from terephthalic acid to the recurring unit derived from isophthalic acid was 70:30. The aromatic polyamide thus prepared had a melting point of 324° C, and an intrinsic viscosity [$\eta$], as measured in concentrated sulfuric acid at 30° C, of 1.00 dl/g.

In the same manner as in Example 1, a mixture comprising 75 parts by weight of the aromatic polyamide (A-2), 25 parts by weight of polyphenylene sulfide (T-4) having a viscosity of 2390 poise (a product of Toprene K.K.) and 67 parts by weight of glass fiber (glass fiber chopped store laid 03MA486A, a product of Asahi Fiber Glass K.K.) and the resulting mixture was pelletized.

Test specimens prepared from the pellets obtained above in the same manner as in Example 1 were put to the same test as in Example 1.

Results obtained are shown in Table 2.

Example 5

Test specimens were prepared in the same manner as in Example 4 except that the amounts of the aromatic polyamide (A-2) and the polyphenylene sulfide (T-4) used were changed respectively to 50% by weight.

The test specimens thus prepared were put to the same tests as in Example 1.

Results obtained are shown in Table 2.

Example 6

Test specimens were prepared in the same manner as in Example 4 except that the amounts of the aromatic polyamide (A-2) and the polyphenylene sulfide (T-4) used were changed to the 30% by weight and 70% by weight, respectively.

The test specimens thus prepared were put to the same test as in Example 1.

Results obtained are shown in Table 2.

Comparative Example 2

Test specimens were prepared in the same manner as in Example 4 except that the polyphenylene sulfide (T-4) was not used, and the amount of the aromatic polyamide (A-2) used was changed to 100 parts by weight.

The test specimens were put to the same tests as in Example 1.

Results obtained are shown in Table 2.

Comparative Example 3.

A composition was prepared by repeating Example 4 except that the aromatic polyamide (A-2) was not used. The composition thus prepared contained the polyphenylene sulfide (T-4) and 40% glass fiber. Catalogue values of the composition are shown in Table 2.

Table 2

| | Example 4 | Example 5 | Example 6 | Comparative Example 2 | Comparative Example 3 |
|---|---|---|---|---|---|
| **Initial characteristics** | | | | | |
| Bending strength ($Kg/cm^2$) | 2750 | 2620 | 2480 | 3300 | 2550 |
| Bending modulus ($Kg/cm^2$) | 130000 | 134000 | 131000 | 127000 | 15000 |
| HDT (264psi) (°C) | 290 | 278 | 274 | 300 | 260 |
| Hygroscopicity (%) | 1.6 | 0.90 | 0.56 | 2.2 | - |
| Change in dimensions at the time of water absorption | | | | | |
| Length | 0.07 | 0.04 | 0.03 | 0.13 | - |
| Width | 0.10 | 0.07 | 0.04 | 0.14 | - |
| **Thermal aging resistance** | | | | | |
| Bending strength ($Kg/cm^2$) | 1930 | 2210 | 1970 | 1110 | - |
| Bending modulus ($Kg/cm^2$) | 138000 | 150000 | 142000 | 127000 | - |

Example 7

Test specimens were prepared in the same manner as in Example 1 except that the following phosphorus stabilizer A and the following amine stabilizer were added to the mixture of the aromatic polyamide, the polyphenylene sulfide and the glass fiber in an amount of 1 part by weight respectively, based on 100 parts by weight of the total weight of the aromatic polyamide (A-1) and the polyphenylene sulfide (T-4).

Phosphorus stabilizer A:
tetrakis(2,4-di-tert-butylphenyl)
4,4'-biphenylene diphosphonite
(Sandoz, Sandostab P-EPQ)

Amine stabilizer:
4,4'-bis(α,α-dimethylbenzyl)diphenylamine
(Ohuchi Shinko Kagaku, Nocrac CD)

The test specimens thus prepared were put to the same tests as in Example 1.

Results obtained are shown in Table 3.

Example 8

Test specimens were prepared in the same manner as in Example 2 except that the following phosphorus stabilizer B and the following phenolic stabilizer were added to the mixture of the aromatic polyamide, the polyphenylene sulfide and the glass fiber in an amount of 0.5 part by weight respectively, based on 100 parts by weight of the total weight of the aromatic polyamide (A-1) and the polyphenylene sulfide (T-4).

The test specimens thus prepared were put to the same tests as in Example 1.

Results obtained are shown in Table 3.

Phosphorus stabilizer B: bis(2,6-di-tert-butyl-4-methylphenyl) pentaerythritol diphosphite

Phenolic stabilizer: 3,9-bis{2-[3-(3-tert-butyl-4-hydroxy-5-methylphenyl)propionyl]-1,1-dimethylethyl}-2,4,8,10-tetraoxaspiro[5,5]-undecane

Example 9

Test specimens were prepared in the same manner as in Example 5 except that the following phosphorus stabilizer A and the amine stabilizer were added to the mixture of the aromatic polyamide, the polyphenylene sulfide and the glass fiber in an amount of 0.5 part by weight respectively, based on 100 parts by weight of the total weight of the aromatic polyamide (A-1) and the polyphenylene sulfide (T-4).

The test specimens thus prepared were put to the same tests as in Example 1.

Results obtained are shown in Table 3.

Table 3

| | Example | | |
|---|---|---|---|
| | 7 | 8 | 9 |
| **Initial characteristics** | | | |
| Bending strength ($Kg/cm^2$) | 2880 | 2430 | 2620 |
| Bending modulus ($Kg/cm^2$) | 124000 | 135000 | 133000 |
| **Thermal aging resistance** | | | |
| Bending strength ($Kg/cm^2$) | 2560 | 2140 | 2450 |
| Bending modulus ($Kg/cm^2$) | 125000 | 135000 | 138000 |

## Claims

1. An aromatic polyamide resin composition comprising
   (I) an aromatic polyamide comprising
   dicarboxylic acid units comprising 30-100 mol% of units derived from terephthalic acid, and 0-70 mol% of units derived from an aromatic dicarboxylic acid other than terephthalic acid and/or 0-70 mol% of an aliphatic dicarboxylic acid having 4-20 carbon atoms, and
   diamine units derived from an aliphatic diamine and/or an alicyclic diamine, and

(II) a polyphenylene sulfide
wherein a weight ratio of (I) to (II) is 5:95~95:5.

2. The aromatic polyamide resin composition as claimed in claim 1 wherein the aromatic polyamide has an intrinsic viscosity, as measured in concentrated sulfuric acid at 30 ° C, of 0.50 to 3.00 dl/g and a melting point of at least 280 ° C.

3. The aromatic polyamide resin composition as claimed in claim 1 or 2 wherein said resin composition comprises 0.5 to 200 parts by weight of a fibrous filler based on 100 parts by weight of the sum total of the aromatic polyamide and polyphenylene sulfide.

4. The aromatic polyamide resin composition as claimed in claim 1 wherein the polyphenylene sulfide has a viscosity, as measured by a flow test under a load of 20 kg and at a temperature of 300 ° C, of 100 to 10,000 poise.

5. An aromatic polyamide resin composition comprising
(I) an aromatic polyamide comprising
dicarboxylic acid units comprising 50-100 mol% of units derived from terephthalic acid, and 0-50 mol% of units derived from an aromatic dicarboxylic acid other than terephthalic acid and/or 0-50 mol% of an aliphatic dicarboxylic acid having 4-20 carbon atoms, and
diamine units derived from an aliphatic diamine and/or an alicyclic diamine, and
(II) a polyphenylene sulfide
wherein a weight ration of (I) to (II) is 5:95~95:5.

6. An aromatic polyamide resin composition comprising
[A] (1) an aromatic polyamide comprising dicarboxylic acid units comprising 30-100 mol% of units derived from terephthalic acid, and 0-70 mol% of units derived from an aromatic dicarboxylic acid other than terephtalic acid and/or 0-70 mol% of an aliphatic dicarboxylic acid having 4-20 carbon atoms, and
diamine units derived from an aliphatic diamine and/or an alicyclic diamine, and
(II) a polyphenylene sulfide
wherein a weight ratio of (I) to (II) is 5:95~95:5,
[B] 0.05-2 parts, based on 100 parts by weight of the total weight of (I) the aromatic polyamide and (II) the polyphenylene sulfide, by weight of a phosphorus stabilizer, and
[C] 0.05-2 parts, based on 100 parts by weight of the total weight of (I) the aromatic polyamide and (II) the polyphenylene sulfide, by weight of an amine stabilizer and/or a phenolic stabilizer.